# EUROPÄISCHE PATENTSCHRIFT

(11) **EP 1 046 642 B1**
(45) Veröffentlichungstag und Bekanntmachung des Hinweises auf die Patenterteilung: **30.06.2004**
(21) Anmeldenummer: 00107970.6
(22) Anmeldetag: 17.04.2000
(51) Int. Cl.: C07F 7/08, C07F 17/00

(54) **Verfahren zur Herstellung von silylverbrückten Fluorenyl-Cyclopentadienyl-Liganden und silylverbrückten Fluorenyl-Cyclopentadienyl-Metallocenen**
Process for preparation of silyl-bridged fluorenyl-cyclopentadienyl ligands and silyl-bridged fluorenyl-cyclopentadienyl metallocenes
Procédé de préparation de ligands fluorényl-cyclopentadiényl pontés par du silicium et leurs dérivés métallocènes

(30) Priorität: 22.04.1999 DE 19918310; 15.07.1999 DE 19933068
(43) Veröffentlichungstag der Anmeldung: 25.10.2000
(73) Patentinhaber: Basell Polyolefine GmbH, 50389 Wesseling (DE)
(72) Erfinder: Bingel, Carsten, Dr., 65830 Kriftel (DE)
(74) Vertreter: Seelert, Stefan, Dr.

(56) Entgegenhaltungen:
- EP-A- 0 628 577
- US-A- 5 393 911
- US-A- 5 401 817

## Beschreibung

Die vorliegende Erfindung betrifft ein einfaches Verfahren zur technischen Herstellung von silylverbrückten Fluorenyl-Cyclopentadienyl-Liganden sowie ein Verfahren zur Herstellung von silylverbrückten Fluorenyl-Cyclopentadienyl-Metallocenen.

Die Metallocene der 4. Nebengruppe des Periodensystems, das sind die Metallocene des Titans, Zirkoniums und des Hafniums, haben sich in den letzten Jahren als ein wichtiger Bestandteil einer bedeutenden neuen Klasse von Polyolefin-Katalysatoren herausgestellt ( H.-H. Brintzinger, D. Fischer, R. Mülhaupt, B. Rieger und R. Waymouth, Angew. Chem. Int. Ed. Engl., 34 (1995) 1143; M. Aulbach und F. Küber, ChiuZ, 28 (1994) 197). Die Metallocene werden, gegebenenfalls in Kombination mit einem oder mehreren Cokatalysatoren, als Katalysatorkomponente für die Polymerisation und Copolymerisation von Olefinen verwendet. Verbrückte Metallocene, sogenannte Ansa-Metallocene, spielen beispeilsweise bei der stereoselektiven Herstellung von Polypropylen eine wichtige Rolle. So läßt sich beispielsweise syndiotaktisches Polypropylen mit verbrückten Fluorenyl-cyclopentadienyl-Metallocenen herstellen (J.A. Ewen, R.L. Jones und A. Razavi, J. Am. Chem. Soc., 110 (1988) 6255).

Die Synthese von Silizium-verbrückten Fluorenyl-cyclopentadienyl-Metallocenen und der Einsatz dieser Verbindungen in der Olefinpolymerisation ist bekannt (K. Patsidis, H. G. Alt, W. Milius und S.J. Palackal, J. Organomet. Chem., 509 (1996) 63-71; W. Spaleck, M. Aulbach, B. Bachmann, F. Küber und A. Winter, Macromol. Symp. 89 (1995) 237-247; US 5401817; US 5393911; EP 0628577). Die Synthese der siliziumverbrückten Fluorenyl-Cyclopentadienyl-Metallocene wird wie am Beispiel eines Zirkonocens gezeigt nach folgendem Schema durchgeführt: 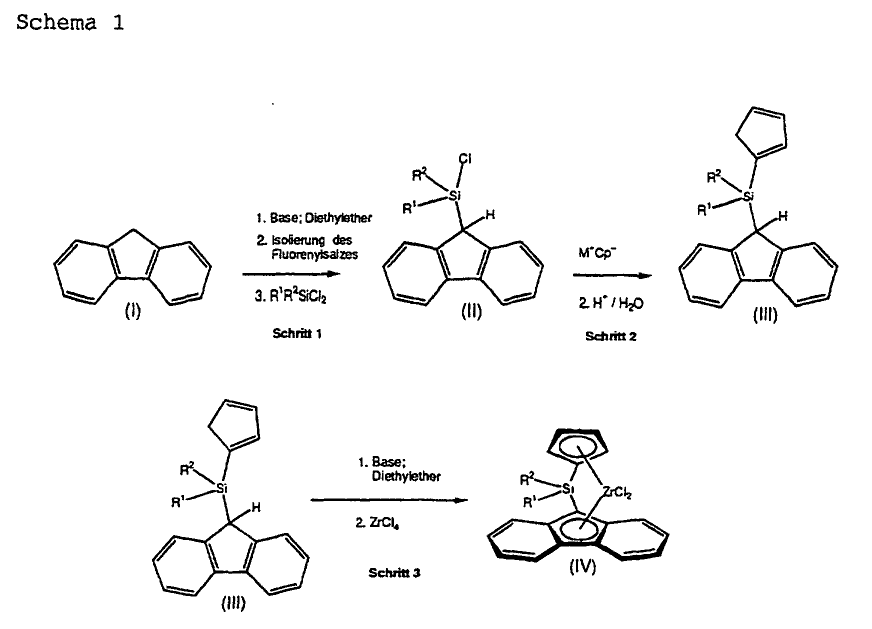 worin R¹, R² gleich oder verschieden Alkyl- oder Arylreste und M gleich Li, Na, MgCl oder MgBr sein können und Cp für Cyclopentadien steht.

Nachteilig an den in der Literatur beschriebenen Synthesen im Hinblick auf eine Übertragung in den produktionstechnischen Maßstab ist die Verwendung von so kritischen Lösungsmitteln wie Diethylether (hochentzündlich) oder Hexamethylphosphorsäuretriamid (carzinogen). Weiterhin ist die Isolierung von Fluorenyllithium bzw. die Isolierung des Bislithiumsalzes des silylverbrückten Fluorenyl-cyclopentadienylliganden ein verfahrenstechnisch aufwendiger Schritt.

Auch eine chromatographische Reinigung von Zwischenstufen ist im technischen Maßstab von großem Nachteil.

Es bestand somit die Aufgabe, für die Schritte 1 bis 3 in Schema 1 Verfahren zu finden, welche die oben genannten Nachteile vermeiden und sich problemlos unter technischen Bedingungen durchführen lassen.

Es wurde nun überraschenderweise gefunden, daß die Schritte 1-3 des obigen Schemas (Schema 1) bei Verwendung geeigneter Lösungsmittel bzw. Lösungsmittelgemische und einer geeigneten Reaktionsführung unter verfahrenstechnisch durchführbaren und sicherheitstechnisch unbedenklichen Bedingungen durchgeführt werden können.

Gegenstand der vorliegenden Erfindung betrifft somit ein Verfahren zur Herstellung von Verbindungen der Formel (IV) 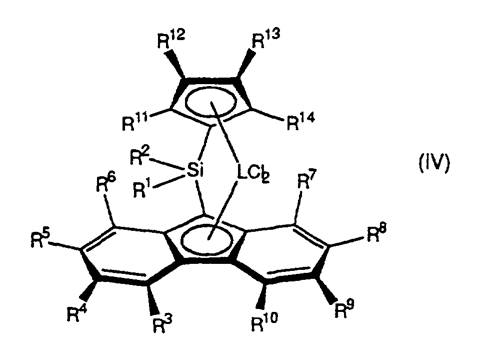 worin
- R¹, R²: gleich oder verschieden C₁-C₂₀ Kohlenwasserstoffreste, bevorzugt C₁-C₁₀-Alkyl- oder C₆-C₁₄-Arylreste, besonders bevorzugt Methyl, Ethyl, tert.-Butyl oder Phenyl sind,
- R³, R⁴, R⁵, R⁶, R⁷, R⁸, R⁹, R¹⁰: gleich oder verschieden Wasserstoff, Halogen, oder C₁-C₂₀ Kohlenwasserstoffreste, bevorzugt Wasserstoff, C₁-C₁₀-Alkyl-, C₁-C₁₀-Alkenyl-, C₆-C₁₄-Aryl-, C₇-C₁₂-Alkylaryl- oder C₇-C₁₂-Arylalkylreste, besonders bevorzugt Wasserstoff, Methyl, Ethyl, Propyl, iso-Propyl, n-Butyl, tert.-Butyl, Amyl, Hexyl, Heptyl, Octyl oder Phenyl sind, wobei bevorzugt mindestens R⁴, R⁷, R⁹ und R¹⁰ gleich Wasserstoff sind,
- R¹¹, R¹², R¹³, R¹⁴: gleich oder verschieden Wasserstoff oder C₁-C₂₀ Kohlenwasserstoffreste, bevorzugt Wasserstoff, C₁-C₁₀-Alkyl-, C₁-C₁₀-Alkenyl-, C₆-C₁₄-Aryl-, C₇-C₁₂-Alkylaryl- oder C₇-C₁₉-Arylalkylreste, besonders bevorzugt Wasserstoff, Methyl, Ethyl, Propyl, iso-Propyl, n-Butyl, tert.-Butyl, Amyl, Hexyl, Heptyl, Octyl, Trimethylsilyl, Triphenylmethyl, 2-Methyl-2-phenyl-propyl, 2,2-Diphenyl-propyl, 2,2-Diphenyl-ethyl oder Phenyl sind, wobei bevorzugt mindestens zwei der Reste R¹¹, R¹², R¹³ oder R¹⁴ gleich wasserstoff sind und
- L: Zirkonium, Hafnium oder Titan bedeuten,
umfassend die Maßnahmen:
a) Deprotonierung der Verbindung der Formel (I) 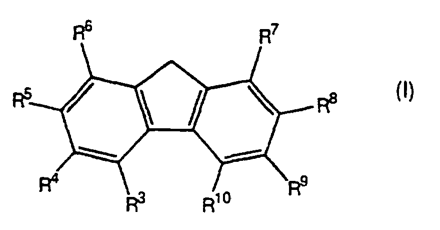 mit einer Base,
b) Umsetzung der deprotonierten Verbindung gemäß Schritt a) mit R¹R²SiCl₂ zur Verbindung der Formel (II) 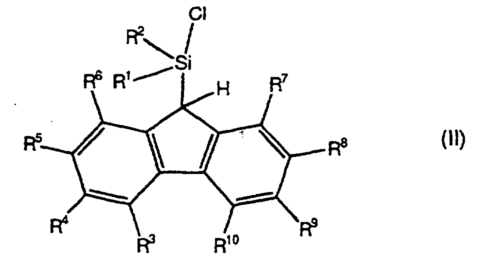 worin R¹, R², R³, R⁴, R⁵, R⁶, R⁷, R⁸, R⁹ und R¹⁰ die vorstehende Bedeutung haben,
c) Umsetzung der gemäß Schritt b) erhaltenen Verbindung der Formel (II) mit
   M⁺Cp⁻ unter Ausbildung der Verbindung der Formel (III) 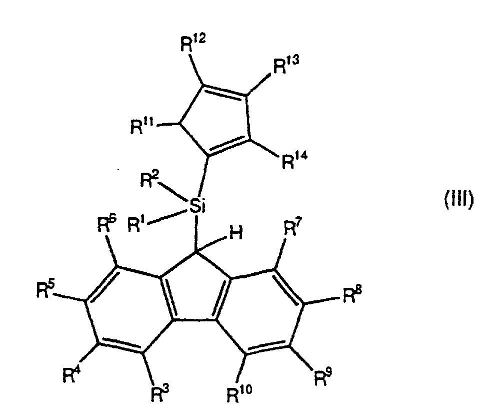 worin R¹, R², R³ , R⁴, R⁵, R⁶, R⁷, R⁸, R⁹, R¹⁰, R¹¹, R¹², R¹³ und R¹⁴ die vorstehende Bedeutung haben,
   - M: für Li, Na, K, MgCl oder MgBr und
   - Cp: für einen substituierten oder unsubstituierten Cyclopentadienyl-Rest steht,
   - d): Umsetzung der Verbindung der Formel (III) mit einer Base und Zugabe von LCl₄ , worin L für Zirkonium, Titan oder Hafnium steht, unter Ausbildung der Verbindung der Formel (IV)
   dadurch gekennzeichnet, daß
   i. die Deprotonierung gemäß Schritt a) in einem Gemisch aus einem oder mehreren aromatischen, aliphatischen Kohlenwasserstoffen und α,β-Dialkoxy-alkanen oder α,β-Dialkoxy-aromaten erfolgt,
   ii. nach erfolgter Deprotonierung und vor der Umsetzung mit dem Organochlorsilan gemäß Schritt b) ein Alkan zugegeben wird,
   iii.die Umsetzung gemäß Schritt d) in einem Gemisch aus einem oder mehreren aromatischen, aliphatischen Kohlenwasserstoff und einem polaren aprotischen Lösungsmittel, ausgenommen Diethylether, erfolgt.

Im Schritt a) wird die Verbindung der Formel (I), beispielsweise Fluoren, in einem inerten Lösungsmittelgemisch mit einer starken Base, wie beispielsweise Butyllithium, deprotoniert und anschließend das entstandene Metallsalz nach Zugabe eines Alkanes mit 5 bis 30 Kohlenstoffatomen, ohne weitere Isolierung direkt, mit einem Siliziumdichloridreagenz R¹R²SiCl₂ zur Verbindung (II) umgesetzt, wobei bevorzugt die Verbindung (II) zum Metallsalz zugegeben wird (Eintopf-Verfahren).

Als Fluorenylverbindung der Formel (I) können neben dem unsubstituierten Fluoren auch ein und mehrfach substituierte Fluorene eingesetzt werden, wie beispielsweise in EP 0528 287 A beschrieben. Beispiele hierfür sind 1-Methyl-fluoren, 4-Methyl-fluoren,1-Tertiärbutyl-fluoren, 2-Ethyl-fluoren, 2-Tertiärbutyl-fluoren, 4-Tertiärbutyl-fluoren, 4-Phenyl-fluoren 2,7-Di-tertiärbutyl-fluoren, 2,7-Di-tertiärbutyl-4-methyl-fluoren und 2,7-Di-tertiärbutyl-4-phenyl-fluoren. Weiterhin können statt substituierten Fluorenen auch die fluorenanalogen heteroatomsubstituierten Tricyclen, die in WO 98/22486 beschrieben werden, eingesetzt werden. Bevorzugt wird Fluoren, 4-Methyl-fluoren, 2-Tertiärbutyl-fluoren, 4-Tertiärbutyl-fluoren, 4-Phenyl-fluoren und 2,7-Di-tertiärbutyl-fluoren verwendet und ganz besonders bevorzugt das unsubstituierte Fluoren und 2,7-Di-tertiärbutyl-fluoren.

Bei der Deprotonierung gemäß Schritt a) wird ein inertes Lösungsmittelgemisch aus einem oder mehreren Kohlenwasserstoffen und einem oder mehreren α,β-Dialkoxyalkanen oder α,β-Dialkoxy-aromaten eingesetzt.

Bei dem erfindungsgemäßen Verfahren werden bis zu einem Mol α,β-Dialkoxyalkane oder α,β-Dialkoxy-aromaten pro Mol Fluoren, vorzugsweise weniger als ein halbes Mol hinzugegeben.

Bei den erfindungsgemäß eingesetzten α,β-Dialkoxyalkanen oder α,β-Dialkoxy-aromaten handelt es sich vorzugsweise um 1,2-Dimethoyethan (DME), 2,3-Dimethoxybutan, 1,2-Diethoxyethan, Dioxan, Diethylenglycoldimethylether, 1,2-Dimethoxybenzol, 1,2-Diethoxybenzol und 2-Ethoxyanisol, insbesondere 1,2-Dimethoxyethan (DME).

Bei den Kohlenwasserstoffen handelt es sich um aromatische und aliphatische Kohlenwasserstoffe, wie z. B. Pentan, Hexan und seine Isomere, Heptan, ®Exxsol DSP 100-120, Toluol, Ethylbenzol, Xylol oder Tetrahydronaphthalin, vorzugsweise Toluol und Heptan.

Um die Bildung von silylverbrückten Bisfluorenylen zurückzudrängen, wird das Siliziumdichloridreagenz R¹R²SiCl₂ im Überschuß bezogen auf das Metallfluorenylsalz eingesetzt, wobei das molare Verhältnis zwischen 1.1 : 1.0 bis 3.5 : 1, bevorzugt 1.25 : 1 bis 2.5 : 1 beträgt. Das überschüssige Siliziumreagenz kann vor Zugabe des M⁺Cp⁻, beispielsweise destillativ oder durch Kristallisation, entfernt werden.

Die Deprotonierung der Verbindung der Formel (I), des Fluorens, wird in einem Temperaturbereich von -30°C bis 80°C, bevorzugt zwischen 20°C und 60°C durchgeführt und die anschließende Umsetzung mit dem Siliziumreagenz zur Verbindung der Formel (II) in einem Temperaturbereich von -78°C bis 50°C, bevorzugt zwischen -30°C und 30°C durchgeführt.

Die Fluorenyl-Monochlor-Siliziumverbindung der Formel (II) erhält man nach Umsetzung mit R¹R²SiCl₂ und nachfolgendem Entfernen der Lösungsmittel und von überschüssigem Siliziumdichloridreagenz R¹R²SiCl₂ (Schritt b). Die mögliche Entfernung des Metallchlorids, zum Beispiel Lithiumchlorid, wird bevorzugt vor der Entfernung der Lösungsmittel durchgeführt. Reine Verbindung der Formel (II) kann man durch Kristallisation aus einem Kohlenwasserstoff, bevorzugt Toluol und/oder Heptan erhalten.

Im Schritt c) wird eine Lösung von einem substituierten oder unsubstituierten Alkali- oder Erdalkali-cyclopentadien M⁺Cp⁻ in einem cyclischen oder acyclischen Ether oder Polyether, mit Ausnahme von Diethylether, mit der Fluorenyl-Monochlor-Siliziumverbindung der Formel (II) zur Verbindung der Formel (III) umgesetzt. Substituierte oder unsubstituierte Cyclopentadiene CpH lassen sich mit starken Basen wie beispielsweise Natrium, Kalium, Natriumhydrid, Kaliumhydrid, Dibutylmagnesium, Butyl-octylmagnesium, Grignardverbindungen, Methyllithium oder n-Butyllithium zu den Verbindungen M⁺Cp⁻ umsetzen. Beispiele für bevorzugte substituierte Cyclopentadiene sind Methylcyclopentadien, Ethylcyclopentadien, Isopropylcyclopentadien, tert.-Butylcyclopentadien, n-Butylcyclopentadien, 1,3-n-Butyl-methyl-cyclopentadien, 1,3-tert.-Butyl-methyl-cyclopentadien, 1,2-tert.-Butyl-methyl-cyclopentadien, 1,2-Dimethylcyclopentadien, 1,3-Dimethylcyclopentadien, 1,3-Di-tert.-butylcyclopentadien oder Trimethylsilylcyclopentadien.

Als Alkali- oder Erdalkali-cyclopentadien wird vorzugsweise Natriumcyclopentadien eingesetzt, welches als Lösung in Tetrahydrofuran (THF) kommerziell erhältlich ist.

Cyclische oder acyclische Ether oder Polyether im Sinne der vorliegenden Erfindung sind beispielsweise Tetrahydrofuran (THF), 2,5-Dimethyltetrahydrofuran, Methyl-tertiärbutyl-ether, Diisopropylether, 1,2-Dimethoxyethan (DME), 1,2-Diethoxyethan, Diethylenglycoldimethylether oder Tetraethylenglycoldimethylether. Bevorzugt werden THF und DME, besonders bevorzugt wird THF eingesetzt.

Im Falle von R¹, R² gleich Phenyl geht aus der Literatur (J. Organomet. Chem., 509 (1996) 64 oder US-A-5,393,911, Spalte 15, Zeile 62,63 ) hervor, daß der 2. Reaktionsschritt nicht in THF funktionieren soll. In Übereinstimmung mit W. Spaleck, M. Aulbach, B. Bachmann, F. Küber und A. Winter, Macromol. Symp. 89 (1995) 237-247 konnte jedoch im Falle von R¹, R² gleich Phenyl gezeigt werden, daß die Reaktion in THF funktioniert, wobei jedoch bei geeigneter Ausarbeitung die in der Literatur beschriebene chromatographische Reinigung vermieden werden kann.

Das molare Verhältnis von Fluorenyl-Monochlor-Siliziumverbindung der Formel (II) zum Cyclopentadienylanion beträgt 1 : 1 bis 1 : 3, bevorzugt 1 : 1.5 bis 1 : 2.5.

Die Reaktion wird im Temperaturbereich von -30°C bis 65°C, vorzugsweise zwischen 0°C und 40°C durchgeführt.

Das Produkt der Formel (III) wird nach wäßriger Aufarbeitung und nach Entfernung von überschüssigem Cyclopentadien gewonnen. Für die weitere Umsetzung wird entweder das Rohprodukt (III) eingesetzt oder (III) wird aus einem geeigneten Lösungsmittel oder Lösungsmittelgemisch, wie beispielsweise Toluol und/oder Heptan kristallisiert.

Im nachfolgenden Schritt d) wird das Cyclopentadienyl-fluorenylsilan (III), das Ligandensystem, in einem inerten Lösungsmittelgemisch, bestehend aus einem Kohlenwasserstoff bzw. Kohlenwasserstoffgemisch und einem polaren aprotischen Lösungsmittel, mit einer starken Base, wie zum Beispiel Butyllithium, zweifach deprotoniert, und das gebildete Bislithiumsalz des Ligandensystems wird ohne Isolierung direkt mit einer Ti-, Zr- oder Hf-tetrahalogenidquelle zum Metallocen (IV) umgesetzt.

Bei dem polaren aprotischen Lösungsmittel handelt es sich um einen cyclischen oder acyclischen Ether oder Polyether, mit Ausnahme von Diethylether, oder auch um ein tertiäres Amine oder Diamin wie Tetramethylethylen-diamin (TMEDA). Bevorzugt werden 1,2-Dimethoxyethan (DME) oder Tetrahydrofuran (THF) eingesetzt. Bevorzugte Lösungsmittelgemische zur Herstellung des Bislithiumsalzes sind Toluol / DME und Toluol / THF, besonders bevorzugt Toluol / THF.

Das Verhältnis von starker Base zu Ligand liegt bei 2.0 : 1 bis 2.5 : 1, bevorzugt 2.0 : 1 bis 2.2 : 1.

Das Verhältnis zwischen polarem aprotischen Lösungsmittel und der starken Base Butyllithium liegt zwischen 0.1 : 1 bis 4 : 1, bevorzugt 0.25 : 1 bis 2 : 1.

Der zweifach deprotonierte Ligand (III) wird mit einer Ti-, Zroder Hf-tetrahalogenidquelle bei -30°C bis 60°C, bevorzugt bei 0°C bis 40°C zum Metallocen (IV) umgesetzt.

Als Ti-, Zr- oder Hf-tetrahalogenidquelle werden bevorzugt die reinen Tetrachloride oder entsprechenden Additionsaddukte der Tetrachloride mit Donorlösungsmitteln wie Ethern oder Aminen eingesetzt. Beispiele für die Additionsaddukte der Tetrahalogenide sind: ZrCl₄*2THF, ZrCl₄*DME, ZrCl₄*TMEDA, TiCl₄*2THF, TiCl₄*DME, TiCl₄*TMEDA, HfCl₄*2THF, HfCl₄*2THF, HfCl₄*2THF.

Besonders bevorzugt sind die oben genannten Verbindungen des Zirkoniums.

Die Isolierung und Reinigung des Metallocens (IV) wird nach literaturbekannten Verfahren durchgeführt (zum Beispiel: J. Organomet. Chem., 509 (1996) 63-71).

In nachfolgenden Schema 2 sind die einzelnen Schritte des neuen Verfahrens zur Herstellung von Metallocenen der Formel (IV) noch einmal in einer bevorzugten Ausführungsform illustriert.

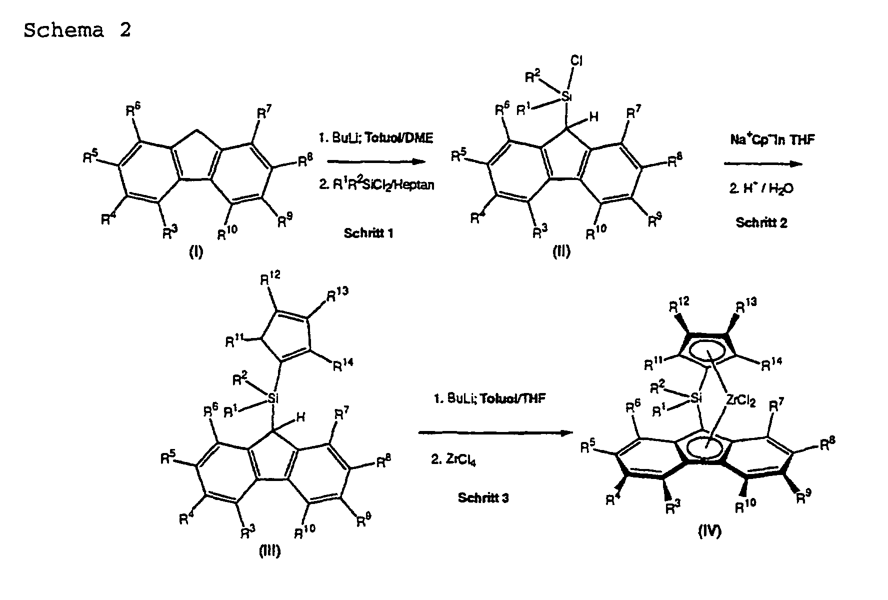

Dabei sind
R¹, R² gleich oder verschieden C₁-C₂₀ Kohlenwasserstoffreste, bevorzugt C₁-C₁₀-Alkyl- oder C₆-C₁₄-Arylreste und
R³, R⁴, R⁵, R⁶, R⁷, R⁸, R⁹, R¹⁰, R¹¹, R¹², R¹³, R¹⁴ sind gleich oder verschieden Wasserstoff, Halogen, oder C₁-C₂₀ Kohlenwasserstoffreste, bevorzugt Wasserstoff, C₁-C₁₀-Alkyl-, C₁-C₁₀-Alkenyl-, C₆-C₁₄-Aryl-, C₇-C₁₂-Alkylaryl- oder C₇-C₁₉-Arylalkylreste.

Bevorzugt sind R¹, R² gleich oder verschieden eine Methyl-, Ethyl-, tert.-Butyl- oder Phenylgruppe, und
R³, R⁴, R⁵, R⁶, R⁷, R⁸, R⁹, R¹⁰, R¹¹, R¹², R¹³, R¹⁴ sind gleich oder verschieden Wasserstoff, Methyl, Ethyl, Propyl, iso-Propyl, n-Butyl, tert.-Butyl, Amyl, Hexyl, Heptyl, Octyl, Trimethylsilyl, Triphenylmethyl, 2-Methyl-2-Phenyl-propyl, 2,2-Diphenyl-propyl, 2,2-Diphenyl-ethyl oder Phenyl.

Ganz besonders bevorzugt ist R¹ gleich R² gleich Methyl oder Phenyl, R³, R⁵, R⁶, R⁸ sind gleich oder verschieden Wasserstoff, Methyl, Phenyl oder tert.-Butyl, R⁴, R⁷, R⁹ und R¹⁰ sind gleich Wasserstoff und R¹¹, R¹², R¹³ und R¹⁴ sind gleich oder verschieden Wasserstoff, Methyl oder tert.-Butyl, wobei mindestens zwei der Reste R¹¹, R¹², R¹³ oder R¹⁴ gleich Wasserstoff sind.

Mit Hilfe des erfindungsgemäßen Verfahrens ist die Zielverbindung der Formel (IV) in technischem Umfang zugänglich. Das erfindungsgemäße Verfahren kann nach jedem Schritt unterbrochen und die Zwischenverbindung isoliert werden. Dies führt insbesondere dazu, daß beispielsweise das Verfahren nach dem Schritt 2 in Schema 2 unterbrochen werden kann und die Verbindung der Formel (III) als Depotsubstanz verwendet werden kann. Dieses Verfahren ist ebenfalls Gegenstand der Erfindung.

Die Erfindung wird durch folgende Beispiele, die jedoch keine Beschränkung der Erfindung darstellen sollen, illustriert.

Allgemeine Angaben: Die Herstellung und Handhabung von luft- und feuchtigkeitsempfindlichen Verbindungen oder Zwischenprodukten wurde unter einer Argonatmosphäre (Schlenktechnik) durchgeführt. Die eingesetzten Reagenzien und Lösungsmittel wurden nicht weiter aufgereinigt.

### Beispiel 1a: 1-Cyclopentadienyl-1,1-dimethyl-1-(9-fluorenyl)-silan (1a)

80 g (0.48 mol) Fluoren wurden in 160 ml Toluol / 12.8 ml (0.12 mol) Dimethoxyethan (DME) vorgelegt und mit 182 ml (0.48 mol) einer 20%igen Lösung von Butyllithium in Toluol versetzt. Die Suspension wurde 2 h bei 50°C nachgerührt. Die Suspension wurde mit 400 ml Heptan verdünnt, auf -30°C abgekühlt und zu einer auf -30°C gekühlten Lösung von 129 g (1.0 mol) Dimethyldichlorsilan in 400 ml Heptan gegeben. Nach 1.5 h Rühren bei Raumtemperatur wurde überschüssiges Dimethyldichlorsilan und die Lösungsmittel unter vermindertem Druck entfernt. Der Rückstand wurde in 100 ml THF aufgenommen und bei 10°C zu 480 ml (0.98 mol) einer Lösung von Cyclopentadienylnatrium in THF gegeben. Das Reaktionsgemisch wurde 2 h bei Raumtemperatur nachgerührt. Anschließend wurden 500 ml Wasser und 600 ml Toluol zugegeben. Nach Phasentrennung, Extraktion mit weiteren 400 ml Toluol und Trocknen mit Magnesiumsulfat wurden die Lösungsmittel entfernt, und es wurden 102 g eines orangen Öls als Rückstand erhalten, bei dem es sich laut NMR zu etwa 90% um 1a handelte.

### Beispiel 1b: Dimethylsilandiyl-(9-fluorenyl)(cyclopentadienyl)-zirkoniumdichlorid (1b)

16 g (50 mmol) 1a wurden in 250 ml Toluol / 20.0 ml DME mit 39.7 ml (106 mmol) einer 20%igen Lösung von Butyllithium in Toluol versetzt und das Reaktionsgemisch 1 h bei 60°C gerührt. Bei 0°C wurden 12.0 g (51.5 mmol) Zirkoniumtetrachlorid zu der Bislithiumsalzsuspension gegeben, und das Reaktionsgemisch wurde 1 h bei 30°C nachgerührt. Nach Abkühlen auf Raumtemperatur wurden etwa 2/3 des Lösungsmittels unter vermindertem Druck entfernt, der Feststoff abfiltriert und mit Methylenchlorid extrahiert. Methylenchlorid wurde größtenteils einrotiert, das ausgefallene orange Pulver wurde durch Filtration isoliert und im Vakuum getrocknet. Es wurden 13.1 g (58%) 1b erhalten.

### Beispiel 2a. Chlor-diphenyl-1-(9-fluorenyl)-silan (2a)

80 g (0.48 mol) Fluoren wurden in 160 ml Toluol / 12.8 ml (0.12 mol) Dimethoxyethan (DME) vorgelegt und mit 182 ml (0.48 mol) einer 20%igen Lösung von Butyllithium in Toluol versetzt. Die Suspension wurde 2 h bei 50°C nachgerührt. Die Suspension wurde mit 800 ml Heptan verdünnt, auf -10°C abgekühlt, und zu der Suspension wurden in einer Portion 182 g (0.72 mol) Diphenyldichlorsilan gegeben. Die Innentemperatur stieg auf 17°C an. Nach 1.5 h Rühren bei Raumtemperatur wurde die Suspension auf 60°C erwärmt und das Lithiumchlorid abfiltriert. Nach Entfernen des Lösungsmittels wurde der ausgefallene Feststoff in Heptan suspendiert, abfiltriert , mit Heptan nahezu farblos gewaschen und im Vakuum getrocknet. Es wurden 136 g (73%) 2a erhalten.

### Vergleichsbeispiel 2aa: Chlor-diphenyl-1-(9-fluorenyl)-silan (2a)

80 g (0.48 mol) Fluoren wurden in 160 ml Toluol / 12.8 ml (0.12 mol) Dimethoxyethan (DME) vorgelegt und mit 182 ml (0.48 mol) einer 20%igen Lösung von Butyllithium in Toluol versetzt. Die Suspension wurde 2 h bei 50°C nachgerührt. Die Suspension wurde mit 400 ml Heptan verdünnt, auf -30°C abgekühlt und zu einer auf -30°C gekühlten Lösung von 182 g (0.72 mol) Diphenyldichlorsilan in 400 ml Heptan gegeben. Nach 1.5 h Rühren bei Raumtemperatur wurde die Suspension auf 60°C erwärmt und das Lithiumchlorid abfiltriert. Nach Entfernen des Lösungsmittels wurde der ausgefallene Feststoff in Heptan suspendiert, abfiltriert , mit Heptan nahezu farblos gewaschen und im Vakuum getrocknet. Es wurden 123 g (66%) 2a erhalten.

### Beispiel 2b: 1-Cyclopentadienyl-1,1-diphenyl-1-(9-fluorenyl)-silan (2b)

Zu einer ca. 2 molaren Lösung von Cyclopentadienylnatrium in Tetrahydrofuran (THF), hergestellt aus 27.8 g (0.42 mol) frisch gecracktem Cyclopentadien und 16.7 g (0.42 mol) 60%igem Natriumhydrid (als Ölsuspension) in 200 ml THF, wurden bei 10°C 80 g (0.21 mol) (2a) zugegeben und das Reaktionsgemisch 3 h bei Raumtemperatur gerührt. Anschließend wurden 300 ml Wasser und 400 ml Toluol zugegeben. Nach Phasentrennung, Extraktion mit weiteren 250 ml Toluol und Trocknen mit Magnesiumsulfat wurden die Lösungsmittel entfernt und der Rückstand in 240 ml n-Heptan aufgenommen. Der Feststoff wurde abfiltriert, mit n-Heptan gewaschen und im Vakuum getrocknet. Es wurden 57 g (65%) 2b erhalten.

### Beispiel 2c: Diphenylsilandiyl-(9-fluorenyl)(cyclopentadienyl)-zirkoniumdichlorid (2c)

20 g (48.5 mmol) 2b wurden in 80 ml Toluol / 4.0 ml THF mit 39.7 ml (106 mmol) einer 20%igen Lösung von Butyllithium in Toluol versetzt und die gelbe Suspension 1 h bei 60°C gerührt. Bei 10°C wurden 12.0 g (51.5 mmol) Zirkoniumtetrachlorid zu der Bislithiumsalzsuspension gegeben, und das Reaktionsgemisch wurde 1 h bei 30°C nachgerührt. Nach Abkühlen auf Raumtemperatur wurde der Feststoff abfiltriert und mit Methylenchlorid extrahiert. Methylenchlorid wurde größtenteils einrotiert, das ausgefallene orange Pulver wurde durch Filtration isoliert und im Vakuum getrocknet. Es wurden 12.5 g (45%) 2c erhalten

## Patentansprüche

1. Verfahren zur Herstellung von Verbindungen der Formel (IV) 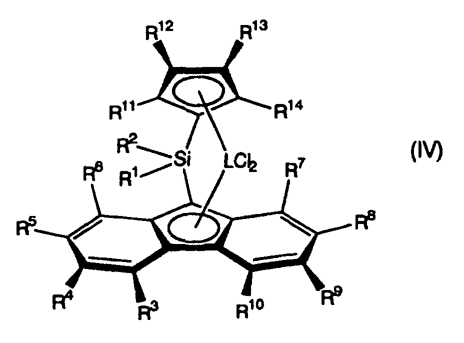 worin
R¹, R² gleich oder verschieden C₁-C₂₀ Kohlenwasserstoffreste sind,
R³, R⁴, R⁵, R⁶, R⁷, R⁸, R⁹, R¹⁰ gleich oder verschieden Wasserstoff, Halogen, oder C₁-C₂₀ Kohlenwasserstoffreste sind,
R¹¹, R¹², R¹³, R¹⁴ gleich oder verschieden Wasserstoff oder C₁-C₂₀ Kohlenwasserstoffreste, sind und
L Zirkonium, Hafnium oder Titan bedeuten,
umfassend die Maßnahmen:
a) Deprotonierung der Verbindung der Formel (I) 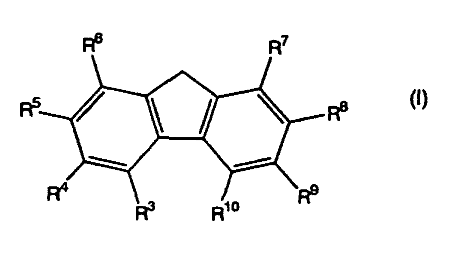 mit einer Base,
b) Umsetzung der deprotonierten Verbindung gemäß Schritt a) mit R¹R²SiCl₂ zur Verbindung der Formel (II) 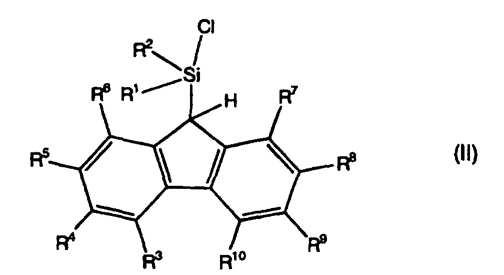 worin R¹, R², R³, R⁴, R⁵, R⁶, R⁷, R⁸, R⁹ und R¹⁰ die vorstehende Bedeutung haben,
c) Umsetzung der gemäß Schritt b) erhaltenen Verbindung der Formel (II) mit M⁺Cp⁻ unter Ausbildung der Verbindung der Formel (III) 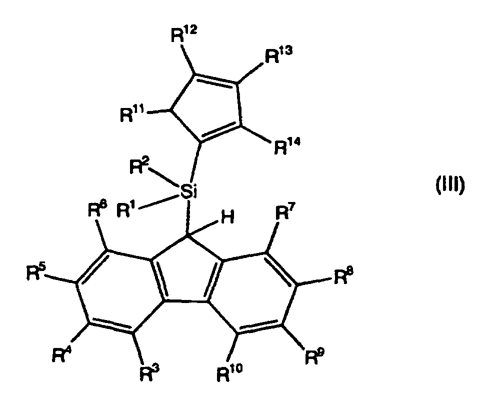 worin R¹, R², R³ , R⁴, R⁵, R⁶, R⁷, R⁸, R⁹, R¹⁰, R¹¹, R¹², R¹³ und R¹⁴ die vorstehende Bedeutung haben,
M für Li, Na, K, MgCl oder MgBr und
Cp für einen substituierten oder unsubstituierten Cyclopentadienyl-Rest steht,
d) Umsetzung der Verbindung der Formel (III) mit einer Base und Zugabe von LCl₄, worin L für Zirkonium, Titan oder Hafnium steht, unter Ausbildung der Verbindung der Formel (IV)
**dadurch gekennzeichnet, daß**
i. die Deprotonierung gemäß Schritt a) in einem Gemisch aus einem oder mehreren aromatischen, aliphatischen Kohlenwasserstoffen und α,β-Dialkoxy-alkanen oder α,β-Dialkoxyaromaten erfolgt, wobei bis zu einem Mol α,β-Dialkoxyalkane oder α,β-Dialkoxy-aromaten pro Mol Fluoren hinzugegeben werden,
ii. nach erfolgter Deprotonierung und vor der Umsetzung mit dem Organochlorsilan gemäß Schritt b) ein Alkan zugegeben wird,
iii.die Umsetzung gemäß Schritt d) in einem Gemisch aus einem oder mehreren aromatischen, aliphatischen Kohlenwasserstoff und einem polaren aprotischen Lösungsmittel, ausgenommen Diethylether, erfolgt,
wobei das Verfahren nach jedem Schritt unterbrochen und die Zwischenverbindung isoliert werden kann.

2. Verfahren gemäß Anspruch 1, **dadurch gekennzeichnet, daß** R¹, R² gleich oder verschieden C₁-C₁₀-Alkyl- oder C₆-C₁₄-Aryl ist.

3. Verfahren gemäß Anspruch 1, **dadurch gekennzeichnet, daß** R³, R⁴, R⁵, R⁶, R⁷, R⁸, R⁹, R¹⁰ gleich oder verschieden C₁-C₁₀-Alkyl-, C₁-C₁₀-Alkyl-, C₆-C₁₄-Aryl-, C₇-C₁₂-Alkylaryl- oder C₇-C₁₂-Arylalkyl ist.

4. Verfahren gemäß Anspruch 1, **dadurch gekennzeichnet, daß** R¹¹, R¹², R¹³, R¹⁴ gleich oder verschieden C₁-C₁₀-Alkyl-, C₁-C₁₀-Alkenyl-, C₆-C₁₄-Aryl-, C₇-C₁₂-Alkylaryl- oder ₇-C₁₂-Arylalkyl ist.

5. Verfahren gemäß Anspruch 1, **dadurch gekennzeichnet, daß** R¹, R² gleich oder verschieden Methyl, Ethyl, tert.-Butyl oder Phenyl sind.

6. Verfahren gemäß Anspruch 1, **dadurch gekennzeichnet, daß** R³, R⁴, R⁵, R⁶, R⁷, R⁸, R⁹, R¹⁰ gleich oder verschieden Methyl, Ethyl, Propyl, iso-Propyl, n-Butyl, tert.-Butyl, Amyl, Hexyl, Heptyl, Octyl oder Phenyl sind, wobei mindestens ein Rest R⁴, R⁷, R⁹ und R¹⁰ gleich Wasserstoff ist.

7. Verfahren gemäß Anspruch 1, **dadurch gekennzeichnet, daß** R¹¹, R¹², R¹³, R¹⁴ gleich oder verschieden Methyl, Ethyl, Propyl, iso-Propyl, n-Butyl, tert.-Butyl, Amyl, Hexyl, Heptyl, Octyl, Trimethylsilyl, Triphenylmethyl, 2-Methyl-2-phenyl-propyl, 2,2-Diphenyl-propyl, 2,2-Diphenyl-ethyl oder Phenyl sind, wobei mindestens zwei der Reste R¹¹, R¹², R¹³ oder R¹⁴ gleich Wasserstoff sind.

8. Verfahren gemäß Anspruch 1, **dadurch gekennzeichnet, daß** als aromatische und aliphatische Kohlenwasserstoffe Pentan, Hexan und seine Isomere, Heptan, Toluol, Ethylbenzol, Xylol, Tetrahydronaphthalin oder Gemische derselben eingesetzt werden.

9. Verfahren gemäß Anspruch 1, **dadurch gekennzeichnet, daß** als α,β-Dialkoxyalkane oder α,β-Dialkoxy-aromaten beispielsweise 1,2-Dimethoyethan (DME), 2,3-Dimethoxybutan, 1,2-Diethoxyethan, Dioxan, Diethylenglycol-dimethylether, 1,2-Dimethoxybenzol, 1,2-Diethoxybenzol oder 2-Ethoxyanisol, insbesondere Dimethoxyethan, eingesetzt werden.

10. Verfahren gemäß Anspruch 1, **dadurch gekennzeichnet, daß** als polares aprotisches Lösungsmittel ein cyclischer oder acyclischer Ether oder Polyether, ausgenommen Diethylether, oder ein tertiäres Amin oder Diamin eingesetzt wird.

## Claims

1. A process for preparing compounds of the formula (IV) 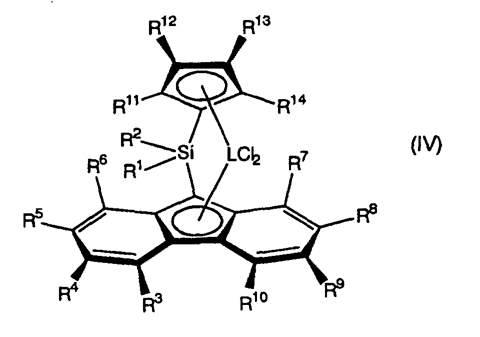 wherein
R¹, R² are identical or different C₁-C₂₀-hydrocarbon radicals,
R³, R⁴, R⁵, R⁶, R⁷, R⁸, R⁹, R¹⁰ are identical or different and are each hydrogen, halogen or a C₁-C₂₀-hydrocarbon radical,
R¹¹, R¹², R¹³, R¹⁴ are identical or different and are each hydrogen or a C₁-C₂₀-hydrocarbon radical, and
L is zirconium, hafnium or titanium,
comprising the measures
a) deprotonation of the compound of the formula (I) 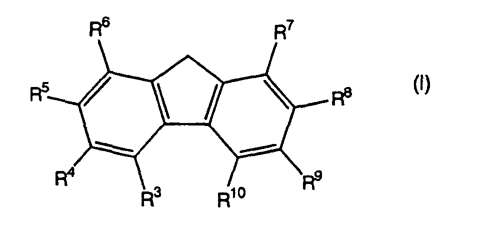 using a base,
b) reaction of the deprotonated compound from step a) with R¹R²SiCl₂ to give the compound of the formula (II) 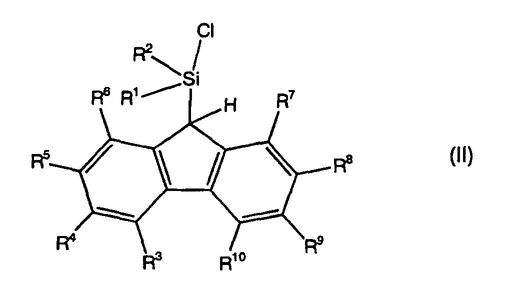 where R¹, R², R³, R⁴, R⁵, R⁶, R⁷, R⁸, R⁹ and R¹⁰ are as defined above,
c) reaction of the compound of the formula (II) obtained as described in step b) with M⁺Cp⁻ to form the compound of the formula (III) 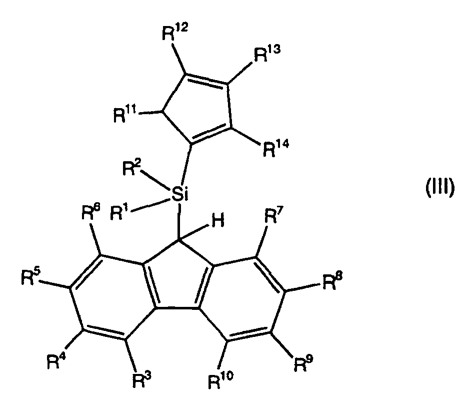 where R¹, R², R³, R⁴, R⁵, R⁶, R⁷, R⁸, R⁹, R¹⁰, R¹¹, R¹², R¹³ and R¹⁴ are as defined above,
M is Li, Na, K, MgCl or MgBr and
Cp is a substituted or unsubstituted cyclopentadienyl radical,
d) reaction of the compound of the formula (III) with a base and addition of LCl₄, where L is zirconium, titanium or hafnium, to form the compound of the formula (IV)
wherein
i. the deprotonation of step a) is carried out in a mixture of one or more aromatic, aliphatic hydrocarbons and α,β-dialkoxyalkanes or α,β-dialkoxyaromatics, with up to one mol of α,β-dialkoxyalkanes or α,β-dialkoxyaromatics being added per mol of fluorene,
ii. an alkane is added after deprotonation is complete and before the reaction with the organochlorosilane as described in step b),
iii.the reaction of step d) is carried out in a mixture of one or more aromatic, aliphatic hydrocarbons and a polar aprotic solvent, with the exception of diethyl ether,
and the process can be interrupted and the intermediate isolated after each step.

2. A process as claimed in claim 1, wherein R¹, R² are identical or different and are C₁-C₁₀-alkyl or C₆-C₁₄-aryl.

3. A process as claimed in claim 1, wherein R³, R⁴, R⁵, R⁶, R⁷, R⁸, R⁹, R¹⁰ are identical or different and are C₁-C₁₀-alkyl, C₁-C₁₀-alkenyl, C₆-C₁₄-aryl, C₇-C₁₂-alkylaryl or C₇-C₁₂-arylalkyl.

4. A process as claimed in claim 1, wherein R¹¹, R¹², R¹³, R¹⁴ are identical or different and are C₁-C₁₀-alkyl, C₁-C₁₀-alkenyl, C₆-C₁₄-aryl, C₇-C₁₂-alkylaryl or C₇-C₁₉-arylalkyl.

5. A process as claimed in claim 1, wherein R¹, R² are identical or different and are methyl, ethyl, tert-butyl or phenyl.

6. A process as claimed in claim 1, wherein R³, R⁴, R⁵, R⁶, R⁷, R⁸, R⁹, R¹⁰ are identical or different and are methyl, ethyl, propyl, isopropyl, n-butyl, tert-butyl, amyl, hexyl, heptyl, octyl or phenyl, where at least one radical R⁴, R⁷, R⁹ and R¹⁰ is hydrogen.

7. A process as claimed in claim 1, wherein R¹¹, R¹², R¹³, R¹⁴ are identical or different and are methyl, ethyl, propyl, isopropyl, n-butyl, tert-butyl, amyl, hexyl, heptyl, octyl, trimethylsilyl, triphenylmethyl, 2-methyl-2-phenylpropyl, 2,2-diphenylpropyl, 2,2-diphenylethyl or phenyl, where at least two of the radicals R¹¹, R¹², R¹³ or R¹⁴ are hydrogen.

8. A process as claimed in claim 1, wherein the aromatic and aliphatic hydrocarbons used are pentane, hexane and its isomers, heptane, toluene, ethylbenzene, xylene, tetrahydronaphthalene or mixtures thereof.

9. A process as claimed in claim 1, wherein the α,β-dialkoxyalkanes or α,β-dialkoxyaromatics used are, for example, 1,2-dimethoxyethane (DME), 2,3-dimethoxybutane, 1,2-diethoxyethane, dioxane, diethylene glycol dimethyl ether, 1,2-dimethoxybenzene, 1,2-diethoxybenzene or 2-ethoxyanisole, in particular dimethoxyethane.

10. A process as claimed in claim 1, wherein the polar aprotic solvent used is a cyclic or acyclic ether or polyether, with the exception of diethyl ether, or a tertiary amine or diamine.

## Revendications

1. Procédé pour la préparation de composés de formule (IV) 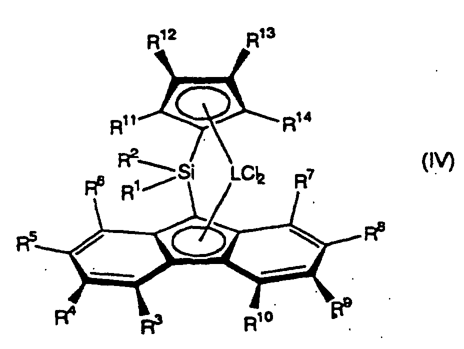 où
R¹, R² sont des restes hydrocarbonés en C₁-C₂₀ identiques ou différents,
R³, R⁴, R⁵, R⁶, R⁷, R⁸, R⁹, R¹⁰ sont identiques ou différents et sont l'hydrogène, des halogènes ou des restes hydrocarbonés en C₁-C₂₀,
R¹¹, R¹², R¹³, R¹⁴ sont identiques ou différents et sont l'hydrogène ou des restes hydrocarbonés en C₁-C₂₀, et
L désigne le zirconium, le hafnium ou le titane,
comprenant les mesures de:
a) déprotonation du composé de formule (I) 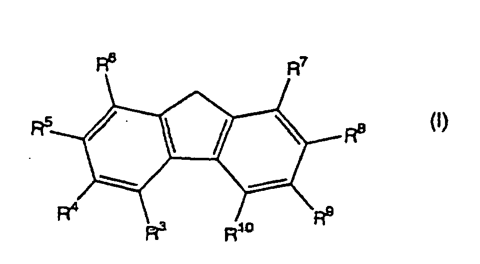 avec une base,
b) réaction du composé déprotoné conformément à l'étape a) avec R¹R²SiCl₂ pour former le composé de formule (II) 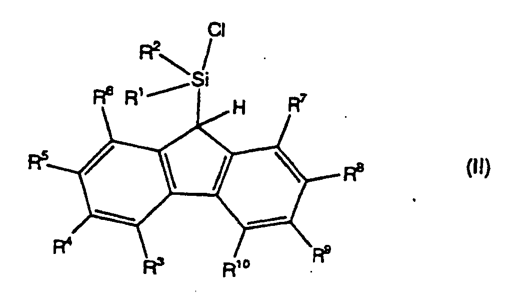 où R¹, R², R³, R⁴, R⁵, R⁶, R⁷, R⁸, R⁹ et R¹⁰ ont la signification susdite,
c) réaction du composé de formule (II) obtenu selon l'étape b) avec M⁺Cp⁻ pour donner le composé de formule (III) 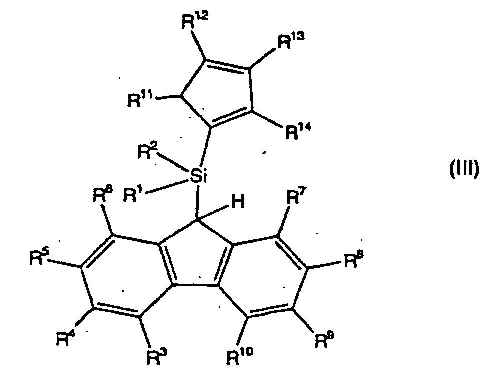 où R¹, R², R³, R⁴, R⁵, R⁶, R⁷, R⁸, R⁹, R¹⁰, R¹¹, R¹² et R¹³ ont la signification susdite,
M désigne Li, Na, K, MgCl ou MgBr, et
Cp représente un reste cyclopentadiényle substitué ou non-substitué,
d) réaction du composé de formule (III) avec une base et addition de LCl₄, où L désigne le zirconium, le titane ou le hafnium, avec formation du composé de formule (IV)
**caractérisé par le fait que**
i. la déprotonation selon l'étape a) s'effectue dans un mélange d'un ou plusieurs hydrocarbures aliphatiques, aromatiques et d'α,β-dialcoxy-alcanes ou de composés α,β-dialcoxy-aromatiques, tandis qu'on ajoute jusqu'à une mole d'α,β-dialcoxy-alcanes par mole de fluorène,
ii. une fois la déprotonation accomplie et avant la réaction avec l'organochlorosilane selon l'étape b) on ajoute un alcane,
iii. la réaction selon l'étape d) est conduite dans un mélange d'un ou plusieurs hydrocarbures aliphatiques, aromatiques et d'un solvant aprotique polaire, à l'exception de l'éther diéthylique, tandis que le procédé peut être interrompu après chaque étape et que le produit intermédiaire peut être isolé.

2. Procédé selon la revendication 1, **caractérisé par le fait que** R¹, R² sont identiques ou différents et sont un alkyle en C₁-C₁₀ ou un aryle en C₆-C₁₄.

3. Procédé selon la revendication 1, **caractérisé par le fait que** R³, R⁴, R⁵, R⁶, R⁷, R⁸, R⁹, R¹⁰ sont identiques ou différents et sont un alkyle en C₁-C₁₀, un alcényle en C₁-C₁₀, un aryle en C₆-C₁₄, un alkylaryle en C₇-C₁₂ ou un arylalkyle en C₇-C₁₂.

4. Procédé selon la revendication 1, **caractérisé par le fait que** R¹¹, R¹², R¹³, R¹⁴ sont identiques ou différents et sont un alkyle en C₁-C₁₀, un alcényle en C₁-C₁₀, un aryle en C₆-C₁₄, un alkylaryle en C₇-C₁₂ ou un arylalkyle en C₇-C₁₂.

5. Procédé selon la revendication 1, **caractérisé par le fait que** R¹, R² sont identiques ou différents et sont le méthyle, éthyle, tert-butyle ou phényle.

6. Procédé selon la revendication 1, **caractérisé par le fait que** R³, R⁴, R⁵, R⁶, R⁷, R⁸, R⁹, R¹⁰ sont identiques ou différents et sont le méthyle, éthyle, propyle, isopropyle, n-butyle, tert-butyle, amyle, hexyle, heptyle, octyle ou phényle, tandis qu'au moins un reste R⁴, R⁷, R⁹ et R¹⁰ est l'hydrogène.

7. Procédé selon la revendication 1, **caractérisé par le fait que** R¹¹, R¹², R¹³, R¹⁴ sont identiques ou différents et sont le méthyle, éthyle, propyle, isopropyle, n-butyle, tert-butyle, amyle, hexyle, heptyle, octyle, triméthylsilyle, triphénylméthyle, 2-méthyl-2-phényl-propyle, 2,2-diphényl-propyle, 2,2-diphényl-éthyle ou phényle, tandis qu'au deux des restes R¹¹, R¹², R¹³ sont l'hydrogène.

8. Procédé selon la revendication 1, **caractérisé par le fait qu'**on utilise comme hydrocarbures aromatiques et aliphatiques le pentane, l'hexane et ses isomères, l'heptane, le toluène, l'éthylbenzène, le xylène, le tétrahydronaphtalène ou des mélanges de ceux-ci.

9. Procédé selon la revendication 1, **caractérisé par le fait qu'**on utilise comme α,β-dialcoxyalcanes ou composés α,β-dialcoxy-aromatiques, par exemple le 1,2-diméthoxyéthane (DME), le 2,3-diméthoxybutane, le 1,2-diéthoxyéthane, le dioxane, l'éther diméthylique de diéthylèneglycol, le 1,2-diméthoxybenzène, le 1,2-diéthoxybenzène ou le 2-éthoxyanisol, en particulier le diméthoxyéthane.

10. Procédé selon la revendication 1, **caractérisé par le fait qu'**on utilise comme solvant aprotique polaire un éther ou polyéther cyclique ou acyclique, excepté l'éther diéthylique, ou une aminé ou diamine tertiaire.
